(19)

Europäisches
Patentamt
European
Patent Office
Office européen
des brevets

(11) **EP 2 293 247 B1**

(12) **EUROPEAN PATENT SPECIFICATION**

(45) Date of publication and mention
of the grant of the patent:
**05.09.2012 Bulletin 2012/36**

(51) Int Cl.:
***G06T 7/00*** *(2006.01)*

(21) Application number: **09009803.9**

(22) Date of filing: **29.07.2009**

(54) **Edge detection with adaptive threshold**

Randerkennung mit einstellbarer Schwelle

Détection de bordure avec seuil adaptatif

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(43) Date of publication of application:
**09.03.2011 Bulletin 2011/10**

(73) Proprietor: **Harman Becker Automotive Systems
GmbH
76307 Karlsbad (DE)**

(72) Inventors:
• **Natroshvili, Koba
76337 Waldbronn (DE)**
• **Mani, Ayyappan
76131 Karlsruhe (DE)**

(74) Representative: **Bertsch, Florian Oliver et al
Kraus & Weisert
Patent- und Rechtsanwälte
Thomas-Wimmer-Ring 15
80539 München (DE)**

(56) References cited:
• **MIGUEL ANGEL GARCIA-GARRIDO ET AL: "Real
Time Driving-Aid System for Different Lighting
Conditions, on Board a Road Vehicle" IEEE
INDUSTRIAL ELECTRONICS, IECON 2006 - 32ND
ANNUAL CONFERENCE ON, IEEE,
PISCATAWAY, NJ, USA, 1 November 2006
(2006-11-01), pages 621-626, XP031077398 ISBN:
978-1-4244-0135-2**
• **GARCIA-GARRIDO M A ET AL: "Fast traffic sign
detection and recognition under changing
lighting conditions" 2006 IEEE INTELLIGENT
TRANSPORTATION SYSTEMS CONFERENCE
(IEEE CAT. NO. 06TH8865) IEEE PISCATAWAY,
NJ, USA,, 17 September 2006 (2006-09-17), pages
811-816, XP002480123 ISBN: 978-1-4244-0094-5**
• **LI ER-SEN, ZHU SHU-LONG, ZHU BAO-SHAN,
ZHAO YONG, XIA CHAO-GUI, SONG LI-HUA: "An
Adaptive Edge-Detection Method Based on the
Canny Operator" INTERNATIONAL
CONFERENCE ON ENVIRONMENTAL SCIENCE
AND INFORMATION APPLICATION
TECHNOLOGY (ESIAT 2009), vol. 1, 4 July 2009
(2009-07-04), - 5 July 2009 (2009-07-05) pages
465-469, XP002562922 Wuhan DOI:
10.1109/ESIAT.2009.49 ISBN: 9780769536828**
• **FABAO YAN ET AL: "Edge Detection of Tank
Level IR Imaging Based on the Auto-Adaptive
Double-Threshold Canny Operator"
INTELLIGENT INFORMATION TECHNOLOGY
APPLICATION, 2008. IITA '08. SECOND
INTERNATIONAL SYMPOSIUM ON, IEEE,
PISCATAWAY, NJ, USA, 20 December 2008
(2008-12-20), pages 366-370, XP031402591 ISBN:
978-0-7695-3497-8**

## Description

This invention relates to a method for detecting edges in an image and to an imaging system detecting edges in the acquired images. The invention finds special application in the detection of edges in images acquired by a camera of a driver assist system of a vehicle. However, the present invention can be applied in many different fields, e.g. in the edge detection of medial images or of any other image for which it is desired to detect the contours contained in the image.

Related Art

The method for edge detection used in this invention is based on an edge detection method known under the name of Canny filter, Mr. Canny being the person who developed this edge detection filter. The aim of a Canny edge detection filter is to obtain a good detection, meaning that the algorithm should mark as many real edges in the image as possible. Furthermore, a good localization should be obtained, meaning that edges marked should be as close as possible to the edge in the real image. The distance of the point detected as edge should be as close as possible to the true edge center. Furthermore, a minimal response should be obtained, meaning that a given edge in the image should only be marked once and image noise should possibly not create false edges.

The Canny filtering method comprises mainly four steps. In a first step the acquired image is smoothed using a Gaussian filter. The result of this first filtering step is a slightly blurred version of the original image which is not affected by a single noisy pixel in order to prevent that such a noise is falsely detected as an edge. In a second step the gradient magnitude and the angles for each pixel are determined. In this step the horizontal, vertical and diagonal edges in the blurred image are detected. In a third step a non-maxima suppression is carried out in the gradient magnitude image.

In this step it is determined whether the gradient magnitude assumes a local maximum in the gradient direction. This step helps to correctly localize the edge, and an edge having a width of more than one pixel in the image is reduced to the width of one pixel. At an edge where the real width is more than one pixel the actual edge is considered to be located at a position where the moment of the gradient has a maximum value. All pixels for which a maximum was determined are kept, whereas the other pixels are set to zero. In a fourth step a double thresholding or hysteresis thresholding is carried out. In this context an upper threshold $T_2$ and a lower threshold $T_1$ are used. The edges that were determined after step 3 have different intensity values. In this step it is determined how relevant an edge is. The image obtained after step 3 still comprises false edges, false meaning that the gradient is lower than a predetermined threshold. For this threshold two thresholds are used, the lower threshold $T_1$ and the upper threshold $T_2$. All pixels in the gradient image having an intensity higher than the upper threshold $T_2$ are considered as real edges in the image, all edges having an image intensity lower than $T_1$ are considered as false thresholds and are set to zero. Additionally, it has to be determined how the intensity values in the gradient image between $T_1$ and $T_2$ are processed. The pixels having the gradient intensity higher than $T_1$ and lower than $T_2$ are considered as being an edge when at least one neighboring pixel is also considered as an edge pixel. If, however, both neighboring pixels in the direction of the edge were considered as not being an edge pixel, then the processed pixel is not considered as being an edge. In the Canny filter algorithms known in the art the two thresholds $T_1$ and $T_2$ are fixed values. However, when edge detection methods are used in driver assist systems where edges are detected by the system in different brightness situations, e.g. during the night or in a foggy or rainy environment, poor edge detection results were obtained.

Garcia-Garrido etal. "Real Time Driving-Aid System for Different Lighting Conditions, on Board a Road Vehicle" (IEEE IECON 2006) and "Fast Traffic Sign Detection and Recognition Under Changing Lighting Conditions" (IEEE ITSC 2006) both describe driving-aid systems incorporating a Canny edge detector with modified hysteresis thresholds computation based on statistics of the intermediate gradient image.

Summary

Accordingly, a need exists to improve the detection of edges in images that are taken in changing weather conditions or in a changing brightness.

This need is met by the features of the independent claims. In the dependent claims preferred embodiments of the invention are described.

According to a first aspect of the invention, a method for detecting edges in a image is provided, the method providing the steps of smoothing the image using a filter. Additionally, a gradient magnitude and angle is determined for each pixel of the image and a non-maximum suppression is carried out. Additionally, a double threshold is applied to the image obtained after the non-maximum suppression applying an upper and a lower threshold for determining the edges in the image. According to the invention the upper and the lower threshold are calculated automatically using a distribution of intensity values of the image. Accordingly, instead of using fixed thresholds, the thresholds are calculated taking into account the characteristics of the image in which the edges should be detected.

Preferably, the edges are detected in a series of images taken by an image acquisition unit, wherein the upper and the lower threshold are calculated automatically for each image based on the distribution of intensity values of the corresponding image. This means that the two thresholds are determined dynamically using the intensity characteristics of each image. In a vehicle environment, especially in the case of a driver assist system, several images are taken per second and have to be processed with a very short delay time, as it may be necessary to react to the edge detection results immediately. By way of example, based on the detected edges a driver assist system may recognize a dangerous object in front of the vehicle or may detect a bend for which it might be necessary to slow down the vehicle velocity. In these situations a fast and reliable detection of edges is necessary.

According to one embodiment of the invention the distribution of intensity values of the image is determined by determining a histogram of the taken image, and in the case of a series of images the histogram is determined for each image or at least for a plurality of the taken images, e.g. for every second or third image.

Additionally, the histogram of the image can be divided into a predetermined number of bins, each bin containing a range of intensity values. By way of example in the case of an 8 bit image the intensity values range from 0 to 255. In this example the histogram from 0 to 255 may be divided into 8 bins, the bins remaining the same for the series of images. However, it is also possible to divide the histogram into a different number of bins. Preferably, the number of bins is between 5 and 10. The same number of bins can also be used for an image having a larger range of intensity values, such as intensity values from 0 to 4095 or any other intensity range. As will be explained below, the number of bins influences the computing time for computing the upper and the lower threshold. The lower the number of bins, the lower the computing time. However, if the number of bins is too low, the error made by the approximation will become too high, resulting in unsatisfactory determinations of the upper and lower threshold.

According to one embodiment of the invention a normalized density function is determined for each bin, wherein the upper and the lower threshold are determined by determining a mean value and a variance of a normalized probability density function. The combined normalized density functions corresponding to the normalized histogram can be considered as the probability density function of intensity values. In this case the mean value and the variance can be determined quite easily, as first and second moments of the stochastic probability intensity function.

When the histogram has been divided into the predetermined number of bins, a center intensity value for each bin may be determined.

In an additional step the number of pixels contained in each bin is determined, wherein the normalized intensity function is determined on the basis of the number of pixels in each bin and on the basis of the number of pixels in the image, the normalized density function of each bin being the ratio of the number of pixels in the corresponding bin to the sum of the number of pixels in all bins corresponding to the number of pixels of the image. When the normalized density function is known for all bins, the probability density function of intensity values is obtained for the range of intensity values present in the image.

When the normalized density function of each bin is known and when the center intensity value of each bin is known, the mean value can be determined using these two parameters.

The presently claimed method for detecting edges is based on the approximation that most of the intensity values are concentrated around a single peak. Even though this may not always be the case in real life, this approximation still gives good results.

Preferably, the upper and lower threshold are determined using the following equations:

$$T_1 = max(0,(\mu - \sigma)/a) \qquad\qquad (1)$$

$$T_2 = min(255,(\mu + \sigma)/b)$$

a being a parameter between 4 and 8, a being preferably 6, b being a parameter between 2 and 4, preferably 3, $\mu$ being the mean value and $\sigma$ being the variance of the normalized probability density function, 255 being the maximum intensity function. For the above determined determination of the upper and lower threshold only the values of 8 bins corresponding to the number of pixels in each bin are needed, resulting in a very fast calculation.

The invention furthermore relates to a computer program product loadable into a memory of a computer, which, when run on the computer, carries out the above explained method for edge detection. Additionally, the invention relates to a computer-readable medium having the computer program recorded thereon.

Furthermore, an imaging system is provided containing an image acquisition unit acquiring the image for which the edges are to be detected, the imaging system furthermore comprising an image processing unit that detects the edges in the image and that works as explained above by automatically determining the upper and lower threshold using the distribution of the density values in the image.

Brief Description of the Drawings

The invention will be described in further detail with reference to the accompanying drawings, in which

Fig. 1 shows a schematic view of a vehicle containing an imaging system allowing an edge detecting using an adaptive determination of the image threshold,

Fig. 2 shows a flow chart with the main steps used for determining the edges in the image,

Fig. 3 shows a flow chart showing in further detail the determination of the adaptive upper and lower threshold,

Fig. 4 shows an example of an image,

Fig. 5 shows the separation of the intensity values into bins and the determined lower and upper thresholds $T_1$ and $T_2$,

Fig. 6 shows an edge detection applied to the image of Fig. 4 using a filter with a non-adaptive determination of the thresholds, whereas

Fig. 7 shows the edge detection result with the adaptive determination of the thresholds.

Detailed Description of Preferred Embodiments

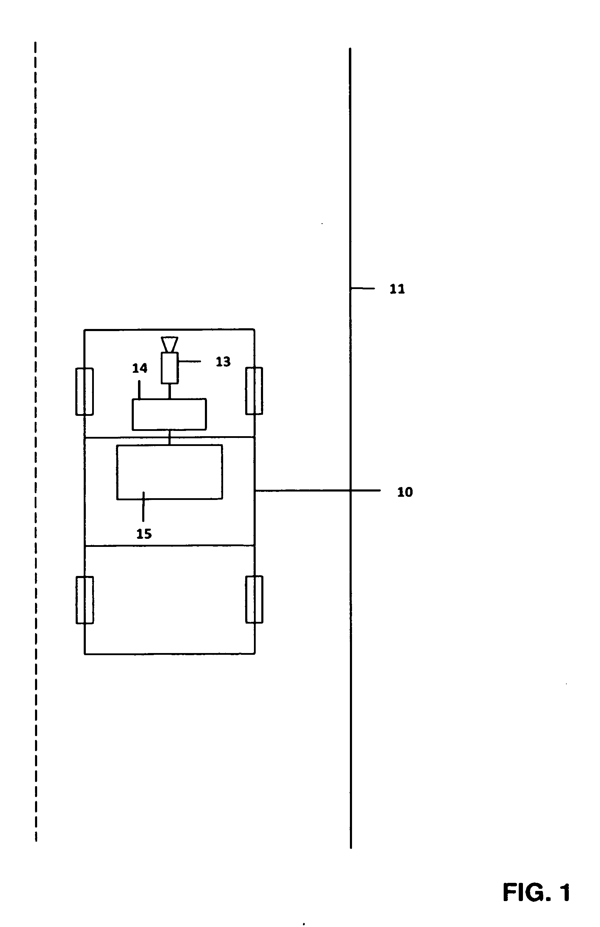

In Fig. 1 a vehicle 10 is shown driving on a road 11, the vehicle comprising a camera or image acquisition unit 13. The camera may be part of a driver assist system, the camera taking images of the front of the vehicle and/or of the back of the vehicle in order to determine possible obstacles. The camera is connected to an image processing unit 14 that processes the acquired images in order to detect edges in the image. The edges may be compared to predetermined contours stored in a database (not shown) in order to recognize the objects contained in the image. By way of example the recognized objects may be traffic signs, other vehicles, pedestrians or any other object which might be important to detect. As several images are acquired per second and as objects have to be determined in the images with high precision, a reliable and fast edge detection is necessary. The result of the image recognition or object detection may be transmitted from the image processing unit 14 to a central control unit 15, the central control unit 15 processing the received information. The central control unit 15 may inform the driver of the recognized object or the central control unit may automatically react to the received information by informing the driver, by adapting the speed, etc. It should be understood that edge detection, as will be explained in further detail below, is not restricted to vehicle applications. The new edge detection method may also be used for detecting contours in a medical image or may be used in any other technical field where it is important to reliably detect contours or edges in an image.

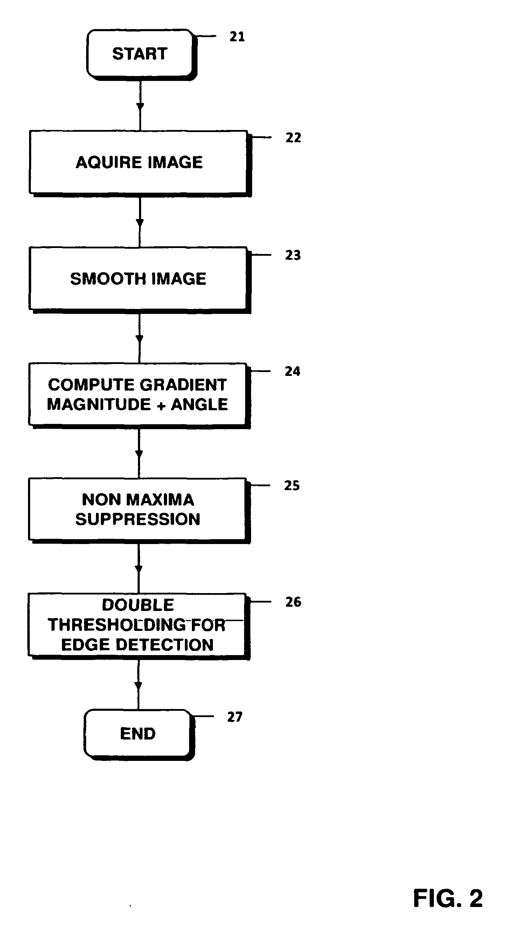

In Fig. 2 the main steps of the edge detection method are summarized. After the start of the method in step 21 the image is acquired in step 22. As the edge detection method is based on a first derivative, it is susceptible to noise present in the acquired image. Accordingly, in step 23 the image is smoothed, by way of example by convolving it with a Gaussian filter. Using the smoothed image in step 24, the gradient magnitude and direction are determined for each pixel of the acquired image. In step 24 the horizontal, vertical and diagonal edges are determined, an edge detection operator, such as Roberts, Prewitt or Sobel, returning a value for the first derivative of the horizontal direction and the vertical direction. From this the edge gradient and direction can be determined. In step 25 a search is carried out to determine if the gradient magnitude is a local maximum in the gradient direction. As the details of the edge detection method after Canny are known in the art, a detailed description of steps 21 to 25 is omitted. In step 26 a double thresholding is carried out for the edge detection, the present invention relating in more detail to step 26. The method may end in step 27 or may return to step 22, where the next image is acquired and where the thresholds are determined adaptively depending on the histogram of the newly acquired image.

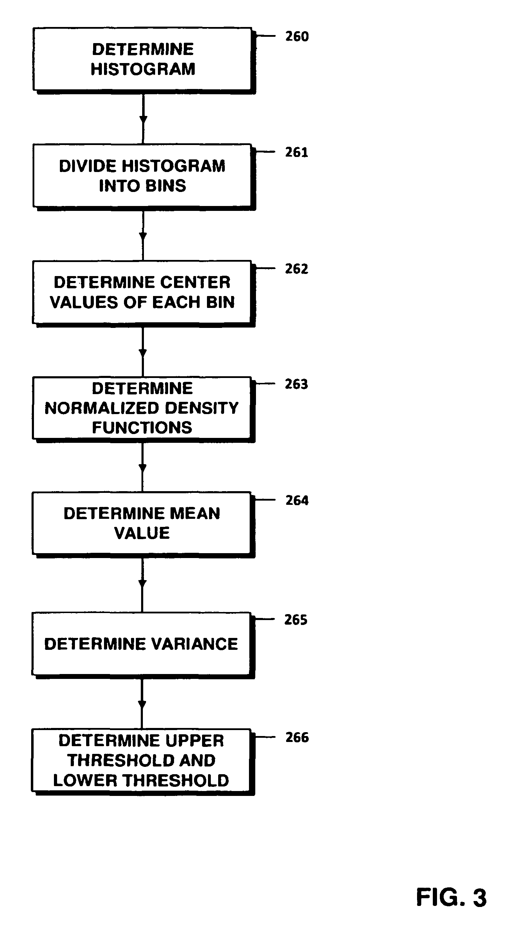

In Fig. 3 the adaptive determination of the upper and lower threshold is explained in more detail. In step 260 the histogram is determined for the image, the histogram being a density plot of the intensity values. In step 261 the complete range of intensity values is divided into a predetermined number of bins, e.g. 8 bins. The complete range of intensity values can be divided into 8 equal intervals. In general, the number of bins may be n. Using MATLAB or similar tools, the borders of the bins may be calculated in the following way:

$$\frac{A \cdot (p - 1.5)}{n - 1} \leq x \leq \frac{A \cdot (p - 0.5)}{n - 1} \qquad (2)$$

p being the numerical order of the bins. In the case of 8 bins it will vary from 1 to 8, A being the maximum intensity value. In the example below the maximum intensity value may be 255 corresponding to an 8 bit image. Using the above-referenced equation (2), the bin borders of the 8 bins can be calculated with the following result:

| -18.21 | 18.21 | 54.64 | 91.07 | 1127.50 | 163.92 | 200.35 | 236.78 | 273.21 |
|--------|-------|-------|-------|---------|--------|--------|--------|--------|

The first and the last bins have the following ranges: [-18.21: 18.21] and [236.78: 273.21]. In the case of the 8 bit image the range of intensity values is 0 to 255. Therefore, the first and the last bins are smaller than the other ones, the first bin ranging from 0 to 18.21, the last bin ranging from 236.78 to 255. In the next step 262 the center intensity value can be calculated for each bin. For the above division into eight bins the following center intensity values may be calculated:

| 0 | 36.42 | 72.85 | 109.28 | 145.71 | 182.14 | 218.57 | 255.00 |
|---|-------|-------|--------|--------|--------|--------|--------|

By way of example the center intensity value 36.42 is the center intensity value for the bin ranging from 18.21 to 54.64. It is noted that the centers are not the real geometrical centers in the case of the first and the last bin. It should be understood that the division of the histogram into bins and the determination of the center intensity values for each bin can be determined in other ways. It is also possible to divide the range of intensity values into another number than 8 bins. The number of bins will be selected based on the desired precision and on the time per image available to determine the edges. In the next step 263 the normalized density functions for the different bins can be calculated. If the initial histogram function was f(x), the normalized functions would look like

$$f_{norm}(i) = \frac{f(i)}{\sum_{1}^{8} f(i)} \quad\quad\quad (3)$$

f(i) being the number of pixels in bin i, the term in the nominator corresponding to the sum of pixels in the different bins corresponding to the complete number of pixels of the image. By way of example in the case of an image matrix of 20 times 20 pixels, the first bin ranging from 0 to 36.42 may contain 20 pixels $f_{norm}$(bin1) being 20/400. Accordingly, for the determination of the normalized density functions the number of pixels in each bin is determined allowing to calculate the normalized density for the different bins. The sum of normalized probability density functions can now be considered as a normalized probability density function of intensity values. In this case the mean value and the variance can be obtained quite easily as the first and second derivative of the normalized probability density function. The mean value of the probability density function can be determined in the following way:

$$\mu = \sum_{1}^{8} f_{norm}(i) \cdot x(i) \quad\quad\quad (4)$$

x(i) being the center intensity value of each bin (step 264). The variance can be calculated in the following way:

$$\sigma^2 = \sum_{1}^{8} f_{norm}(i) \cdot (x(i) - \mu)^2 \qu\quad\quad (5)$$

For the determination of the mean value and the variance the approximation has been made that the histogram contains one major peak. This may not correspond to the histogram of the taken images, as these histograms may contain two or more peaks. Nevertheless, the detection results of edge detection using this approximation showed to give good edge detection results. When the variance has been determined in step 265, the upper threshold and the lower threshold can be determined in step 266 using the following equations:

$$T_1 = max(0,(\mu - \sigma)/a) \hspace{3cm} (6)$$

$$T_2 = min(A,(\mu + \sigma)/b) \hspace{3cm} (7)$$

a being a parameter between 5 and 7, preferably 6, b being a parameter between 2 and 4, preferably 3, A being the maximum intensity value.

These equations were obtained in a heuristic way.

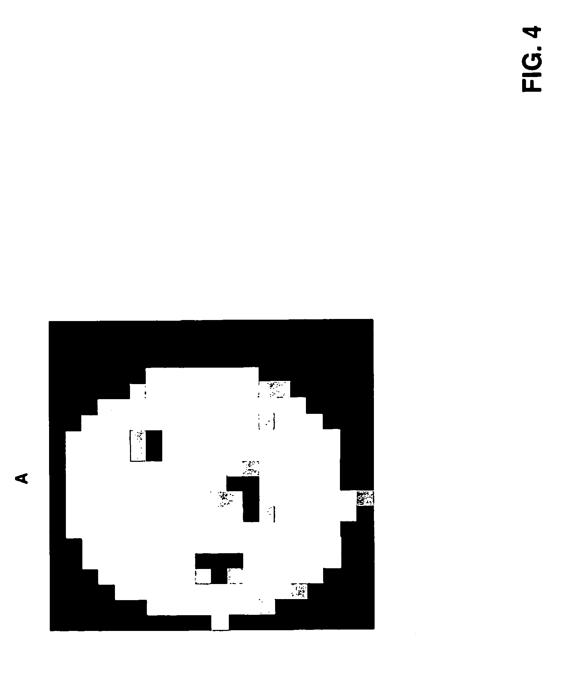

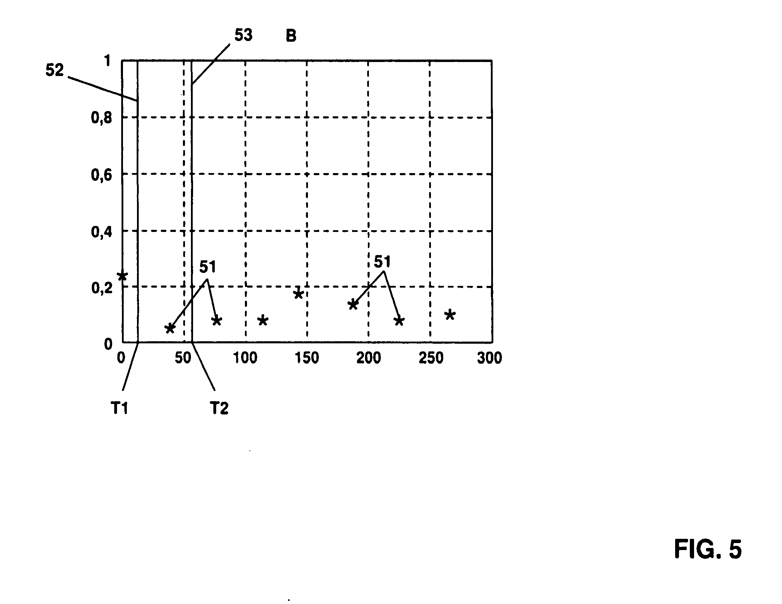

In Figs. 4-7 an edge detection result is shown. Fig. 4 shows a traffic sign of a speed limit of 60 with an image of $20 \times 20$ pixels, leading to the badly visible traffic sign. In Fig. 5 the normalized probability density function is shown. The stars 51 in the histogram show the normalized density functions at the center intensity values of each bin. Furthermore, the two thresholds, the upper and the lower threshold $T_2$ and $T_1$, are shown as calculated as mentioned above. Line 52 shows the lower threshold $T_1$, line 53 showing the upper threshold $T_2$.

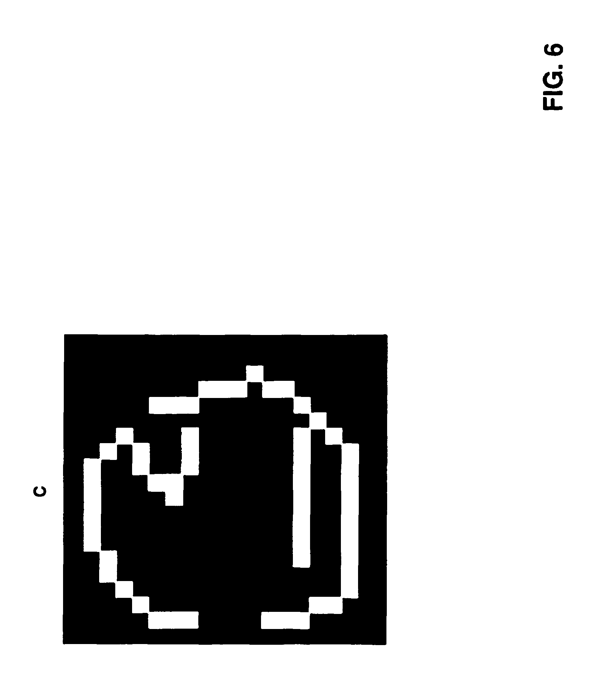

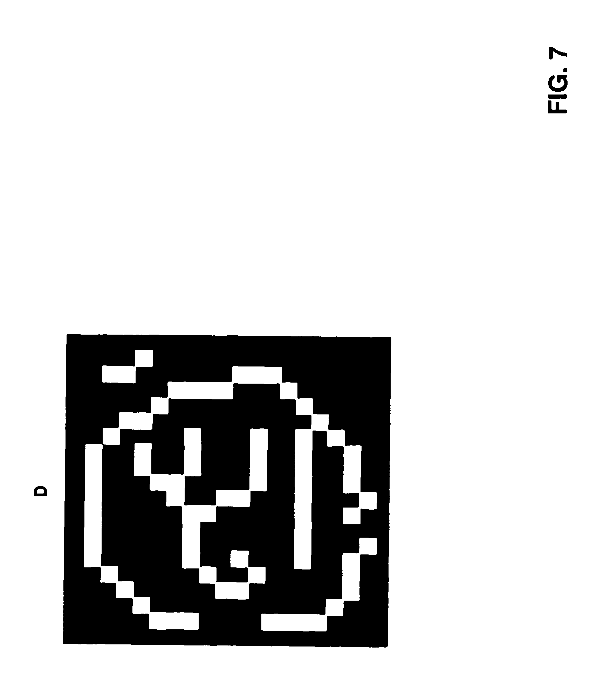

Fig. 6 shows an image using the filter method as described in Fig. 2, but with a fixed upper and lower threshold, whereas Fig. 7 shows the result of edge detection using the above-described adaptive algorithm for the determination of $T_1$ and $T_2$. When Figs. 6 and 7 compared, it can be noticed that more edge were detected in Fig. 7 using the adaptive determination of the two thresholds. Especially in case the images are taken of a dark environment or in rainy conditions, the above-described adaptive edge detection gives much better results than the edge detection using a fixed lower and upper threshold.

## Claims

1.   A method for detecting edges in an image, the method comprising the steps of:

   - smoothing the image using a filter,
   - determining a gradient magnitude and angle for each pixel of the image,
   - performing a non-maximum suppression, and
   - applying a double threshold (T1, T2) with an upper (T1) and a lower threshold (T2) for determining the edges in the image, wherein the upper and the lower threshold are calculated automatically using a distribution of intensity values of the image, wherein the histogram is divided into a predetermined number of bins,

   characterized in that a normalized density function is determined for each bin resulting in a normalized probability density function, wherein the upper and the lower threshold (T1, T2) are determined by determining a mean value and a variance of the normalized probability density function,
   wherein the upper and the lower threshold are determined using the following equations:

$$T_1 = max(0,(\mu - \sigma)/a) \hspace{3cm} (6)$$

$$T_2 = min(A,(\mu + \sigma)/b) \hspace{3cm} (7)$$

   $\mu$ being the mean value of the normalized probability density function, $\sigma$ being the variance of the probability density function, a being a parameter between 5 and 7, preferably 6, b being a parameter between 2 and 4, preferably 3, A being the maximum intensity value.

2.   The method according to claim 1, wherein the distribution of intensity values of the image is determined by determining a histogram of the image.

3.   The method according to claim 1, further comprising the step of determining a center intensity value for each bin.

4. The method according to any of claims 1 to 3, further comprising the step of determining the number of pixels contained in each bin, wherein the normalized density function is determined on the basis of the number of pixels in each bin and on the basis of the number of pixels in the image.

5. The method according to claim 3 or 4, wherein the mean value is determined on the basis of the normalized density function of each bin and on the basis of the center intensity value for each bin.

6. The method according to any of the preceding claims, wherein the edges are detected in a series of images, wherein the upper and the lower threshold (T1, T2) are calculated automatically for each image based on the distribution of intensity values of the corresponding image.

7. Computer program product loadable into a memory of a computer, which, when run on the computer, carries out the method as mentioned in any of claims 1 to 6.

8. Computer readable medium having a program recorded thereon, which, when run on the computer, carries out the method as mentioned in any of claims 1 to 6.

9. An Imaging system comprising:

- an image acquisition unit(13) acquiring an image,
- an image processing unit (14) for detecting edges in the image, wherein the image processing unit is adapted to smooth the image, determine a gradient magnitude and angle for each pixel of the image, perform a non-maximum suppression and apply a double threshold to determine the edges, wherein the image processing unit automatically calculates the upper and the lower threshold using a distribution of intensity values of the image, wherein the image processing unit divides the histogram into a predetermined number of bins and determines a normalized density function for each bin resulting in a normalized probability density function, wherein the upper and the lower threshold (T1, T2) are determined by determining a mean value and a variance of the normalized probability density function, wherein the image processing unit determines the upper and the lower threshold using the following equations:

$$T_1 = max(0,(\mu - \sigma)/a) \qquad (6)$$

$$T_2 = min(A,(\mu + \sigma)/b) \qquad (7)$$

$\mu$ being the mean value of the normalized probability density function, $\sigma$ being the variance of the probability density function, a being a parameter between 5 and 7, preferably 6, b being a parameter between 2 and 4, preferably 3, A being the maximum intensity value.

**Patentansprüche**

1. Verfahren zum Detektieren von Kanten in einem Bild, wobei das Verfahren die Schritte umfasst:

- Glätten des Bildes unter Verwendung eines Filters,
- Bestimmen einer Gradientenmagnitude und eines Winkels für jeden Pixel des Bildes,
- Durchführen einer Nicht-Maximum-Unterdrückung und
- Anwenden eines doppelten Schwellenwerts (T1, T2) mit einem oberen (T1) und einem unteren Schwellenwert (T2) zum Bestimmen der Kanten in dem Bild, wobei der obere und der untere Schwellenwert automatisch unter Verwendung einer Verteilung von Intensitätswerten des Bilds berechnet werden, wobei das Histogrammm in eine vorbestimmte Anzahl von Klassen unterteilt wird,

**dadurch gekennzeichnet, dass** eine normalisierte Dichtefunktion für jede Klasse bestimmt wird, was in einer normalisierten Wahrscheinlichkeits-Dichte-Funktion resultiert, wobei der obere und der untere Schwellenwert (T1, T2) durch Bestimmen eines Mittelwerts und einer Varianz der normalisierten Wahrscheinlichkeits-Dichte-Funktion bestimmt werden,
wobei der obere und der untere Schwellenwert unter Verwendung der folgenden Gleichungen bestimmt werden:

$$T_1 = max(0,(\mu - \sigma)/a) \qquad (6)$$

$$T_2 = min(A,(\mu + \sigma)/b) \qquad (7)$$

wobei μ der Mittelwert der normalisierten Wahrscheinlichkeits-Dichte-Funktion ist, σ die Varianz der Wahrscheinlichkeits-Dichte-Funktion ist, a ein Parameter zwischen 5 und 7, vorzugsweise 6 ist, b ein Parameter zwischen 2 und 4, vorzugsweise 3 ist, A der maximale Intensitätswert ist.

2. Verfahren nach Anspruch 1, wobei die Verteilung von Intensitätswerten des Bilds durch Bestimmen eines Histogramms des Bilds bestimmt wird.

3. Verfahren nach Anspruch 1, weiterhin umfassend den Schritt des Bestimmens eines zentralen Intensitätswerts für jede Klasse.

4. Verfahren nach einem der Ansprüche 1 bis 3, weiterhin umfassend den Schritt des Bestimmens der Anzahl der Pixel, die in jeder Klasse beinhaltet sind, wobei die normalisierte Dichtefunktion basierend auf der Anzahl der Pixel in jeder Klasse und basierend auf der Anzahl der Pixel in dem Bild bestimmt wird.

5. Verfahren nach Anspruch 3 oder 4, wobei der Mittelwert basierend auf der normalisierten Dichtefunktion jeder Klasse und basierend auf dem zentralen Intensitätswert für jede Klasse bestimmt wird.

6. Verfahren nach einem der voranstehenden Ansprüche, wobei die Kanten in einer Serie von Bildern detektiert werden, wobei der obere und der untere Schwellenwert (T1, T2) automatisch für jedes Bild basierend auf der Verteilung von Intensitätswerten des entsprechenden Bilds berechnet werden.

7. Computerprogrammprodukt, das in einen Speicher eines Computers geladen werden kann, welches, wenn es auf dem Computer ausgeführt wird, das Verfahren, wie es in einem der Ansprüche 1 bis 6 genannt ist, durchführt.

8. Computer-lesbares Medium mit einem darauf aufgezeichneten Programm, welches, wenn es auf dem Computer ausgeführt wird, das Verfahren, wie es in einem der Ansprüche 1 bis 6 genannt ist, durchführt.

9. Bildgebungssystem, umfassend:

- eine Bildaufnahmeeinheit (13), die ein Bild aufnimmt,
- eine Bildverarbeitungseinheit (14) zum Detektieren von Kanten in dem Bild, wobei die Bildverarbeitungseinheit eingerichtet ist, um das Bild zu glätten, eine Gradientenmagnitude und einen Winkel für jeden Pixel des Bildes zu bestimmen, eine Nicht-Maximum-Unterdrückung durchzuführen und einen doppelten Schwellenwert zum Bestimmen der Kanten anzuwenden, wobei die Bildverarbeitungseinheit automatisch den oberen und den unteren Schwellenwert unter Verwendung einer Verteilung von Intensitätswerten des Bilds berechnet, wobei die Bildverarbeitungseinheit das Histogramm in eine vorbestimmte Anzahl von Klassen unterteilt und eine normalisierte Dichtefunktion für jede Klasse bestimmt, was in einer normalisierten Wahrscheinlichkeits-Dichte-Funktion resultiert, wobei der obere und der untere Schwellenwert (T1, T2) durch Bestimmen eines Mittelwerts und einer Varianz der normalisierten Wahrscheinlichkeits-Dichte-Funktion bestimmt werden, wobei die Bildverarbeitungseinheit den oberen und den unteren Schwellenwert unter Verwendung der folgenden Gleichungen bestimmt:

$$T_1 = max(0,(\mu - \sigma)/a) \qquad (6)$$

$$T_2 = min( A.(\mu + \sigma )/b) \qquad\qquad (7)$$

wobei $\mu$ der Mittelwert der normalisierten Wahrscheinlichkeits-Dichte-Funktion ist, $\sigma$ die Varianz der Wahrscheinlichkeits-Dichte-Funktion ist, a ein Parameter zwischen 5 und 7, vorzugsweise 6 ist, b ein Parameter zwischen 2 und 4, vorzugsweise 3 ist, A der maximale Intensitätswert ist.

**Revendications**

1. Procédé de détection de contours dans une image, le procédé comprenant les étapes de:

   - lisser l'image à l'aide d'un filtre,
   - déterminer une grandeur de gradient et un angle pour chaque pixel de l'image,
   - exécuter une suppression non maximale, et
   - appliquer un double seuil (T1, T2), avec un seuil haut (T1) et un seuil bas (T2), pour déterminer les contours dans l'image, dans lequel les seuils haut et bas sont calculés automatiquement à l'aide d'une distribution de valeurs d'intensité de l'image, dans lequel l'histogramme est divisé dans un nombre déterminé de classes (bins),

   **caractérisé en ce qu'**une fonction de densité de probabilité normalisée est déterminée pour chaque classe conduisant à une fonction de densité de probabilité normalisée, dans lequel les seuils haut et bas (T1, T2) sont déterminés en déterminant une valeur moyenne et une variance de la fonction de densité de probabilité normalisée, dans lequel les seuils haut et bas sont déterminés en utilisant les équations suivantes:

   $$T_1 = \max(0, (\mu - \sigma)/a) \qquad\qquad (6)$$

   $$T_2 = \min(A, (\mu + \sigma)/b) \qquad\qquad (7)$$

   $\mu$ étant la valeur moyenne de la fonction de densité de probabilité normalisée, $\sigma$ étant la variance de la fonction de densité de probabilité, a étant un paramètre entre 5 et 7, de préférence 6, b étant un paramètre entre 2 et 4, de préférence 3, A étant la valeur d'intensité maximale.

2. Procédé selon la revendication 1, dans lequel la distribution de valeurs d'intensité de l'image est déterminée en déterminant un histogramme de l'image.

3. Procédé selon la revendication 1, comprenant en outre l'étape de déterminer une valeur d'intensité centrale pour chaque classe.

4. Procédé selon l'une quelconque des revendications 1 à 3, comprenant en outre l'étape de déterminer le nombre de pixels contenus dans chaque classe, dans lequel la fonction de densité normalisée est déterminée à base du nombre de pixels dans chaque classe et à base du nombre de pixels dans l'image.

5. Procédé selon la revendication 3 ou 4, dans lequel la valeur moyenne est déterminée à base de la fonction de densité normalisée de chaque classe et à base de la valeur d'intensité centrale pour chaque classe.

6. Procédé selon l'une quelconque des revendications précédentes, dans lequel les contours sont détectés dans une série d'images, dans lequel les seuils haut et bas (T1, T2) sont calculés automatiquement pour chaque image à base de la distribution de valeurs d'intensité de l'image correspondante.

7. Produit de programme d'ordinateur chargeable dans une mémoire d'un ordinateur, lequel, lorsqu'il est exécuté sur l'ordinateur, met en oeuvre le procédé tel qu'indiqué dans l'une quelconque des revendications 1 à 6.

8. Support lisible par ordinateur sur lequel est enregistré un programme, lequel, lorsqu'il est exécuté sur l'ordinateur, met en oeuvre le procédé tel qu'indiqué dans l'une quelconque des revendications 1 à 6.

9. Système d'imagerie comprenant:

- une unité d'acquisition d'image (13) acquérant une image,
- une unité de traitement d'image (14) pour détecter des contours dans l'image, dans lequel l'unité de traitement d'image est adaptée à lisser l'image, déterminer une grandeur de gradient et un angle pour chaque pixel de l'image, effectuer une suppression non maximale et appliquer un double seuil pour déterminer les contours, dans lequel l'unité de traitement d'image calcule automatiquement les seuils haut et bas en utilisant une distribution de valeurs d'intensité de l'image, dans lequel l'unité de traitement d'image divise l'histogramme dans un nombre prédéterminé de classes et détermine une fonction de densité normalisée pour chaque classe conduisant à une fonction de densité de probabilité normalisée, dans lequel les seuils haut et bas (T1, T2) sont déterminés en déterminant une valeur moyenne et une variance de la fonction de densité de probabilité normalisée, dans lequel l'unité de traitement d'image détermine les seuils haut et bas en utilisant les équations suivantes:

$$T_1 = \max(0, (\mu-\sigma)/a) \qquad (6)$$

$$T_2 = \min(A, (\mu+\sigma)/b) \qquad (7)$$

$\mu$ étant la valeur moyenne de la fonction de densité de probabilité normalisée, $\sigma$ étant la variance de la fonction de densité de probabilité, a étant un paramètre entre 5 et 7, de préférence 6, b étant un paramètre entre 2 et 4, de préférence 3, A étant la valeur d'intensité maximale.

**FIG. 1**

START ⎯ 21

↓

AQUIRE IMAGE ⎯ 22

↓

SMOOTH IMAGE ⎯ 23

↓

COMPUTE GRADIENT MAGNITUDE + ANGLE ⎯ 24

↓

NON MAXIMA SUPPRESSION ⎯ 25

↓

DOUBLE THRESHOLDING FOR EDGE DETECTION ⎯ 26

↓

END ⎯ 27

FIG. 2

FIG. 3

FIG. 4

FIG. 5

FIG. 6

FIG. 7

# EP 2 293 247 B1

**REFERENCES CITED IN THE DESCRIPTION**

**Non-patent literature cited in the description**

- **GARCIA-GARRIDO et al.** Real Time Driving-Aid System for Different Lighting Conditions, on Board a Road Vehicle. *IEEE IECON,* 2006

- Fast Traffic Sign Detection and Recognition Under Changing Lighting Conditions. *IEEE ITSC,* 2006